(19) Europäisches Patentamt
European Patent Office
Office européen des brevets

(11) EP 4 338 878 A1

(12) EUROPEAN PATENT APPLICATION
published in accordance with Art. 153(4) EPC

(43) Date of publication:
20.03.2024 Bulletin 2024/12

(51) International Patent Classification (IPC):
*B23H 1/02* [(2006.01)]

(21) Application number: 21947132.3

(22) Date of filing: 24.06.2021

(52) Cooperative Patent Classification (CPC):
B23H 1/02; B23H 7/02

(86) International application number:
PCT/JP2021/023907

(87) International publication number:
WO 2022/269847 (29.12.2022 Gazette 2022/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: FANUC CORPORATION
Oshino-mura
Minamitsuru-gun
Yamanashi 401-0597 (JP)

(72) Inventors:
• NISHIKAWA, Ryo
Minamitsuru-gun, Yamanashi 401-0597 (JP)
• CHU, Fuchen
Minamitsuru-gun, Yamanashi 401-0597 (JP)

(74) Representative: Keil & Schaafhausen
Patentanwälte PartGmbB
Bockenheimer Landstraße 25
60325 Frankfurt am Main (DE)

(54) **WIRE ELECTRIC DISCHARGE MACHINE, AND CONTROL METHOD FOR WIRE ELECTRIC DISCHARGE MACHINE**

(57) This wire electric discharge machine (10) comprises: an average interelectrode voltage calculation unit (32) which calculates an average interelectrode voltage between electrodes; a correction unit (34) which determines a corrected average interelectrode voltage in accordance with the speed of machining performed on a workpiece by a wire electrode (12); and a motor control unit (36) which keeps constant the magnitude of the distance between electrodes during machining, by controlling an X-axis motor (24) and a Y-axis motor (26) on the basis of the corrected average interelectrode voltage. The correction unit (34) determines a corrected average interelectrode voltage according to a formula in which the average interelectrode voltage is expressed as a numerator and a value, obtained by using a coefficient as a base and the machining speed as an exponent, is expressed as a denominator.

FIG. 1

EP 4 338 878 A1

**Description**

TECHNICAL FIELD

The present invention relates to a wire electrical discharge machine for performing machining of a workpiece by generating an electric discharge between a wire electrode and the workpiece, as well as to a control method for such a wire electrical discharge machine.

BACKGROUND ART

In WO 2015/145484 A1, a wire electrical discharge machine is disclosed. The wire electrical discharge machine includes a control unit that controls a machining speed (a relative speed of a machining electrode with respect to a workpiece). A difference between the machining speed and a setting speed is correlated with a distance (a side gap) between the machining electrode and the workpiece. For this reason, in accordance with the difference between the machining speed and the setting speed, the control unit compensates an average inter-electrode machining voltage between the machining electrode and the workpiece. The control unit controls the machining speed based on the compensated average inter-electrode machining voltage. Consequently, the wire electrical discharge machine can maintain a constant side gap during electrical discharge machining, and is capable of improving the machining accuracy of the workpiece.

SUMMARY OF THE INVENTION

The correlation between a size of the difference between the machining speed and the setting speed, and a size of the side gap becomes smaller as the difference between the machining speed and the setting speed becomes larger. Therefore, in the wire electrical discharge machine according to WO 2015/145484 A1, a problem arises in that the machining accuracy of the workpiece decreases as the difference between the machining speed and the setting speed increases.
The present invention has the object of solving the problem described above.
A first aspect of the present invention is characterized by a wire electrical discharge machine configured to carry out machining of a workpiece by generating an electric discharge in an inter-electrode gap between a wire electrode and the workpiece, the wire electrical discharge machine including a discharge state value acquisition unit configured to acquire, as a discharge state value, any one of an average inter-electrode voltage, which is a time average of a voltage applied to the inter-electrode gap, a reciprocal of a number of discharge pulses in the inter-electrode gap per unit time, or a discharge delay time period, which is a time period from when the voltage is applied to the inter-electrode gap until when electric discharging takes place in the inter-electrode gap, a discharge state value compensation unit configured to compensate the discharge state value to obtain a compensated value in accordance with a machining speed, which is a relative speed of the wire electrode with respect to the workpiece, a driving unit configured to cause the wire electrode to move relatively with respect to the workpiece, and a control unit configured to control the driving unit based on the compensated value, and thereby keep a size of the inter-electrode gap constant during machining, wherein the discharge state value compensation unit determines the compensated value based on an equation in which the discharge state value defines a numerator, and a value obtained by exponentiation with a coefficient as a base and the machining speed as an exponent defines a denominator.
A second aspect of the present invention is characterized by a method of controlling a wire electrical discharge machine configured to carry out machining of a workpiece by generating an electric discharge in an inter-electrode gap between a wire electrode and the workpiece, the method of controlling the wire electrical discharge machine including a discharge state value acquisition step of acquiring, as a discharge state value, any one of an average inter-electrode voltage, which is a time average of a voltage applied to the inter-electrode gap, a reciprocal of a number of discharge pulses in the inter-electrode gap per unit time, or a discharge delay time period, which is a time period from when the voltage is applied to the inter-electrode gap until when electric discharging takes place in the inter-electrode gap, a discharge state value compensation step of compensating the discharge state value to obtain a compensated value in accordance with a machining speed, which is a relative speed of the wire electrode with respect to the workpiece, a driving step of causing the wire electrode to move relatively with respect to the workpiece by a driving unit, and a control step of controlling the driving unit based on the compensated value, and thereby keeping a size of the inter-electrode gap constant during machining, wherein, in the discharge state value compensation step, the compensated value is determined based on an equation in which the discharge state value defines a numerator, and a value obtained by exponentiation with a coefficient as a base and the machining speed as an exponent defines a denominator.
According to the present invention, the wire electrical discharge machine is capable of improving the machining accuracy of the workpiece.

BRIEF DESCRIPTION OF DRAWINGS

FIG. 1 is a schematic diagram showing a wire electrical discharge machine;
FIG. 2 is a diagram providing a description concerning an electric discharge gap;
FIG. 3A is a graph showing a voltage applied to an inter-electrode gap, and an average inter-electrode voltage;
FIG. 3B is a graph showing a voltage applied to an inter-electrode gap, and an average inter-electrode voltage;
FIG. 4 is a schematic diagram showing a wire electrical discharge machine; and
FIG. 5 is a schematic diagram showing a wire electrical discharge machine.

DETAILED DESCRIPTION OF THE INVENTION

[First Embodiment]

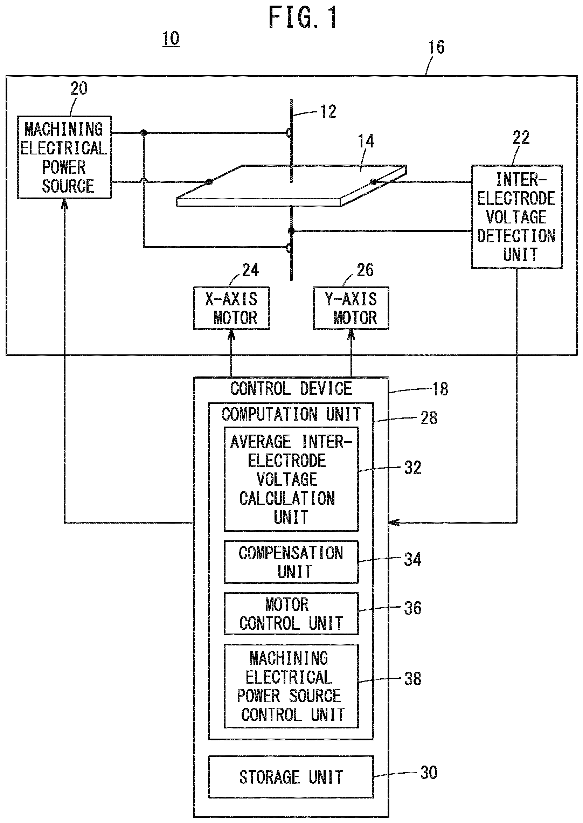

FIG. 1 is a schematic diagram showing a wire electrical discharge machine 10. The wire electrical discharge machine 10 is a machine tool that performs electrical discharge machining on a workpiece 14 by applying a voltage between a wire electrode 12 and the workpiece 14 (hereinafter sometimes referred to as an inter-electrode gap) to thereby generate an electric discharge. The material for the wire electrode 12, for example, is a metal material such as tungsten, a copper alloy, or brass, etc. The material for the workpiece 14, for example, is an iron-based material, a superhard (tungsten carbide) material, or the like. The wire electrical discharge machine 10 includes a machine main body 16 and a control device 18.

The machine main body 16 includes a machining electrical power source 20, an inter-electrode voltage detection unit 22, an X-axis motor 24, and a Y-axis motor 26. The machining electrical power source 20 applies a voltage to the inter-electrode gap between the electrode and the workpiece. The inter-electrode voltage detection unit 22 is a voltage sensor that detects a voltage applied to the inter-electrode gap between the electrode and the workpiece (hereinafter also referred to as simply an inter-electrode voltage). The X-axis motor 24 and the Y-axis motor 26 cause a non-illustrated work table to move. By the workpiece 14, which is fixed to the work table, moving together with the work table, the wire electrode 12 undergoes relative movement with respect to the workpiece 14.

The control device 18 includes a computation unit 28 and a storage unit 30. The computation unit 28 is constituted by a processor, for example, such as a CPU (Central Processing Unit), a GPU (Graphics Processing Unit), or the like. The computation unit 28 includes an average inter-electrode voltage calculation unit 32, a compensation unit 34, a motor control unit 36, and a machining electrical power source control unit 38. The average inter-electrode voltage calculation unit 32, the compensation unit 34, the motor control unit 36, and the machining electrical power source control unit 38 are realized by a program stored in the storage unit 30 being executed by the computation unit 28. At least one of the average inter-electrode voltage calculation unit 32, the compensation unit 34, the motor control unit 36, or the machining electrical power source control unit 38 may be realized by an integrated circuit such as an ASIC (Application Specific Integrated Circuit) or an FPGA (Field-Programmable Gate Array) or the like. At least one of the average inter-electrode voltage calculation unit 32, the compensation unit 34, the motor control unit 36, or the machining electrical power source control unit 38 may be constituted by an electronic circuit including a discrete device.

The storage unit 30 is constituted by a non-illustrated volatile memory, and a non-illustrated non-volatile memory. The volatile memory is, for example, by a RAM (Random Access Memory). For example, data that is used temporarily is stored in the volatile memory. The non-volatile memory, for example, is a ROM (Read Only Memory), a flash memory, or the like. For example, programs, tables, maps, and the like are stored in the non-volatile memory. At least a portion of the storage unit 30 may be provided in the aforementioned processor, the integrated circuit, or the like.

The average inter-electrode voltage calculation unit 32 calculates a time average of the inter-electrode voltage detected by the inter-electrode voltage detection unit 22. Hereinafter, the time average of the inter-electrode voltage may be referred to as an average inter-electrode voltage. The average inter-electrode voltage calculation unit 32 corresponds to the discharge state value acquisition unit of the present invention. The compensation unit 34 compensates the average inter-electrode voltage in accordance with the relative speed of the wire electrode 12 with respect to the workpiece 14. Hereinafter, the relative speed of the wire electrode 12 with respect to the workpiece 14 may be referred to as a machining speed. The compensation of the average inter-electrode voltage performed in the compensation unit 34 will be described in detail later. The compensation unit 34 corresponds to the discharge state value compensation unit of the present invention. The motor control unit 36 controls the X-axis motor 24 and the Y-axis motor 26, and thereby sets the machining speed to a target machining speed. The target machining speed is set based on the average inter-electrode voltage obtained after compensation thereof has been carried out in the compensation unit 34. Hereinafter, the average inter-electrode voltage on which compensation thereof has been performed in the compensation unit 34 may be referred to as a compensated average inter-electrode voltage. The motor control unit 36 corresponds to the control unit of the present invention. The machining electrical power source control unit 38 controls the machining electrical power source 20, and thereby applies a voltage to the inter-electrode gap.

Moreover, it should be noted that the motor control unit 36 may perform a proportional control, an integral control, and a derivative control (PID control) on the X-axis motor 24 and the Y-axis motor 26. The motor control unit 36 may control the X-axis motor 24 and the Y-axis motor 26 based on the target machining speed, which is set based on the average inter-electrode voltage prior to being compensated. In this case, the motor control unit 36 may set at least one of a proportional gain, an integration time, or a derivative time in accordance with the compensated average inter-electrode voltage.

[Concerning the Compensation Unit]

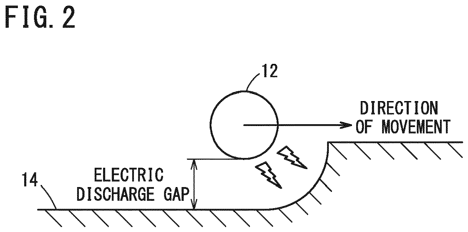

FIG. 2 is a diagram providing a description concerning an electric discharge gap. According to the present embodiment, the size of an inter-electrode gap in a direction perpendicular to the direction in which the wire electrode 12 moves relatively with respect to the workpiece 14 during electrical discharge machining of the workpiece 14 is referred to as an electric discharge gap. In order to improve the machining accuracy of the workpiece 14 by the wire electrical discharge machine 10, the motor control unit 36 controls the X-axis motor 24 and the Y-axis motor 26 to thereby keep the electric discharge gap substantially constant during electrical discharge machining of the workpiece 14.

During electrical discharge machining of the workpiece 14, it is difficult to directly detect the electric discharge gap by the wire electrical discharge machine 10. Thus, according to the present embodiment, instead of controlling the X-axis motor 24 and the Y-axis motor 26 on the basis of the electric discharge gap, the motor control unit 36 controls the X-axis motor 24 and the Y-axis motor 26 based on the average inter-electrode voltage.

However, even if the average inter-electrode voltage during electrical discharge machining of the workpiece 14 is constant, the electric discharge gap becomes smaller as the machining speed increases. Thus, according to the present embodiment, the compensation unit 34 compensates the average inter-electrode voltage on the basis of the machining speed, and thereby obtains a compensated average inter-electrode voltage. The motor control unit 36 controls the X-axis motor 24 and the Y-axis motor 26 based on the compensated average inter-electrode voltage. Consequently, the electric discharge gap during electrical discharge machining of the workpiece 14 is kept substantially constant.

The compensated average inter-electrode voltage is determined by the following Equation (1). "Ec" in the equation indicates the compensated average inter-electrode voltage. "E" in the equation indicates the average inter-electrode voltage. "$\alpha 1$" in the equation indicates a coefficient. "V" in the equation indicates the machining speed.

$$Ec = E / \alpha 1^{(1+V)} \qquad \qquad \ldots \ (1)$$

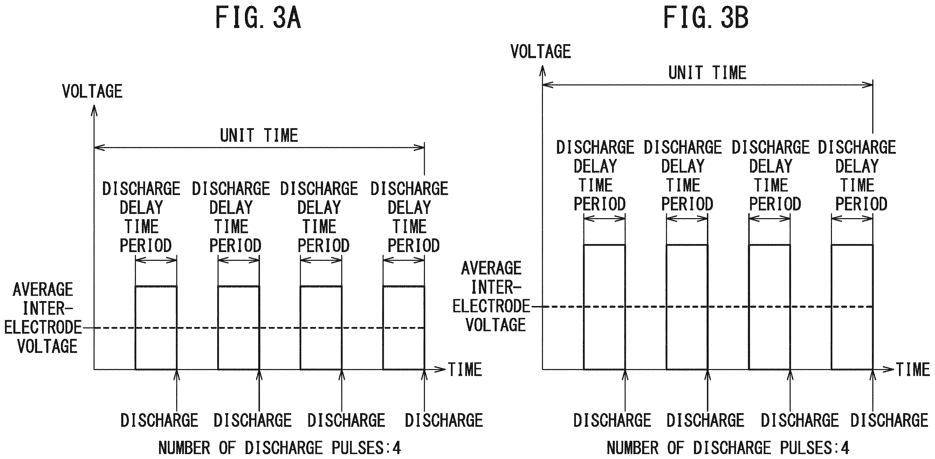

FIG. 3A and FIG. 3B are graphs showing a voltage applied to the inter-electrode gap, and the average inter-electrode voltage. As shown in FIG. 3A and FIG. 3B, even in the case that the number of discharge pulses per unit time is the same, and a discharge delay time period from when the voltage is applied to the inter-electrode gap to when discharging takes place in the inter-electrode gap is the same, the average inter-electrode voltage changes in accordance with the voltage that is applied to the inter-electrode gap. Therefore, the compensation unit 34 changes the coefficient "$\alpha 1$" in Equation (1) in accordance with the voltage applied to the inter-electrode gap.

[Actions and Advantageous Effects]

In the wire electrical discharge machine 10 according to the present embodiment, the compensation unit 34 determines the compensated average inter-electrode voltage on the basis of an equation in which the average inter-electrode voltage defines a numerator, and a value obtained by exponentiation with the coefficient as the base and the machining speed as the exponent defines a denominator. The motor control unit 36 controls the X-axis motor 24 and the Y-axis motor 26 based on the compensated average inter-electrode voltage, and thereby keeps the size of the electric discharge gap constant during machining. In accordance with this feature, the wire electrical discharge machine 10 is capable of improving the machining accuracy of the workpiece 14.

In the wire electrical discharge machine 10 according to the present embodiment, the compensation unit 34 determines the compensated average inter-electrode voltage on the basis of the above-described Equation (1). In accordance with this feature, regardless of the machining speed, the wire electrical discharge machine 10 is capable of keeping the size of the electric discharge gap constant during electrical discharge machining of the workpiece 14.

In the wire electrical discharge machine 10, the motor control unit 36, in accordance with the compensated average inter-electrode voltage, sets at least one of the proportional gain of the proportional control, the integration time of the integral control, the derivative time of the derivative control, or the target machining speed. In accordance with this feature, the wire electrical discharge machine 10 is capable of improving the machining accuracy of the workpiece 14.

[Second Embodiment]

In the first embodiment, the motor control unit 36 sets the target machining speed based on the average inter-electrode voltage. In contrast to this feature, according to the present embodiment, the target machining speed is set based on a reciprocal of the number of discharge pulses per unit time. In the example shown in FIG. 3A and FIG. 3B, the number of discharge pulses per unit time is "4", and the reciprocal of the number of discharge pulses per unit time is "1/4". Hereinafter, the number of discharge pulses per unit time may be simply referred to as the number of discharge pulses.

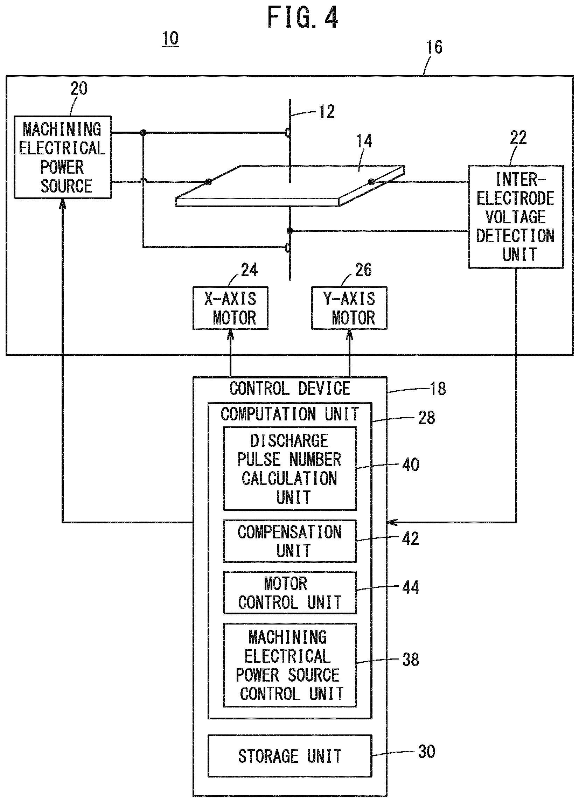

FIG. 4 is a schematic diagram showing the wire electrical discharge machine 10. The structure of the machine main body 16 is the same as the structure of the machine main body 16 according to the first embodiment. The computation unit 28 of the control device 18 includes a discharge pulse number calculation unit 40, a compensation unit 42, a motor control unit 44, and a machining electrical power source control unit 38. The machining electrical power source control unit 38 is the same as the machining electrical power source control unit 38 according to the first embodiment.

The discharge pulse number calculation unit 40 determines the number of discharge pulses per unit time based on the inter-electrode voltage detected by the inter-electrode voltage detection unit 22, and calculates the reciprocal of the number of discharge pulses. When a voltage is applied to the inter-electrodes gap and then the insulation between the electrode and the workpiece breaks down to cause an electric discharge, the inter-electrode voltage decreases. The discharge pulse number calculation unit 40 calculates the number of discharge pulses based on the number of times that a voltage is applied to the inter-electrode gap, and thereafter, the inter-electrode voltage becomes less than or equal to a predetermined voltage. The discharge pulse number calculation unit 40 corresponds to the discharge state value acquisition unit of the present invention. The compensation unit 42 compensates the reciprocal of the number of discharge pulses in accordance with the machining speed, and thereby determines the compensated reciprocal of the number of discharge pulses. A description will be given later concerning the compensation of the reciprocal of the number of discharge pulses performed in the compensation unit 42. The compensation unit 42 corresponds to the discharge state value compensation unit of the present invention. The motor control unit 44 controls the X-axis motor 24 and the Y-axis motor 26, and thereby sets the machining speed to a target machining speed. The target machining speed is set based on the reciprocal of the number of discharge pulses that has been compensated in the compensation unit 42. Hereinafter, the number of discharge pulses after having been compensated may be referred to as the number of compensated discharge pulses. The motor control unit 44 corresponds to the control unit of the present invention. The reciprocal of the number of compensated discharge pulses corresponds to the compensated value of the present invention.

Moreover, it should be noted that the motor control unit 44 may perform a proportional control, an integral control, or a derivative control (PID control) on the X-axis motor 24 and the Y-axis motor 26. The motor control unit 44 may control the X-axis motor 24 and the Y-axis motor 26 based on the target machining speed that has been set based on the reciprocal of the number of discharge pulses prior to being compensated. In this case, the motor control unit 44 may set at least one of the proportional gain, the integration time, or the derivative time in accordance with the reciprocal of the number of compensated discharge pulses.

The compensation unit 42 determines the reciprocal of the number of compensated discharge pulses on the basis of the following Equation (2). "Nc" in the equation indicates the reciprocal of the number of compensated discharge pulses. "N" in the equation indicates the reciprocal of the number of discharge pulses. "$\alpha2$" in the equation indicates a coefficient. "V" in the equation indicates the machining speed.

$$\mathrm{Nc} \ = \ \mathrm{N}/\alpha 2^{(1+V)} \qquad\qquad \ldots \ (2)$$

As shown in FIG. 3A and FIG. 3B, the average inter-electrode voltage changes in accordance with the voltage applied to the inter-electrode gap. Therefore, the compensation unit 34 of the first embodiment changes the coefficient "$\alpha1$" in Equation (1) in accordance with the voltage applied to the inter-electrode gap. On the other hand, as shown in FIG. 3A and FIG. 3B, the number of discharge pulses does not change in accordance with the voltage applied to the inter-electrode gap. Therefore, there is no need for the compensation unit 42 according to the present embodiment to change the coefficient "$\alpha2$" of Equation (2) in accordance with the voltage applied to the inter-electrode gap.

[Actions and Advantageous Effects]

In the wire electrical discharge machine 10 according to the present embodiment, the compensation unit 42 determines the reciprocal of the number of compensated discharge pulses on the basis of an equation in which the reciprocal of the number of discharge pulses per unit time defines a numerator, and the value obtained by exponentiation with the coefficient as the base and the machining speed as the exponent defines a denominator. The motor control unit 44 controls the X-axis motor 24 and the Y-axis motor 26 based on the number of compensated discharge pulses, and thereby keeps the size of the electric discharge gap constant during machining. In accordance with this feature, the wire electrical discharge machine 10 is capable of improving the machining accuracy of the workpiece 14.

In the wire electrical discharge machine 10 according to the present embodiment, the compensation unit 42 determines the reciprocal of the number of compensated discharge pulses on the basis of the above-described Equation (2). In accordance with this feature, regardless of the machining speed, the wire electrical discharge machine 10 is capable of keeping the size of the electric discharge gap constant during electrical discharge machining of the workpiece 14.

In the wire electrical discharge machine 10 according to the present embodiment, the discharge pulse number calculation unit 40 determines the number of discharge pulses per unit time based on the inter-electrode voltage detected by the inter-electrode voltage detection unit 22, and calculates the reciprocal of the number of discharge pulses. The compensation unit 42 determines the reciprocal of the number of compensated discharge pulses on the basis of the above-described Equation (2). Since the number of discharge pulses per unit time does not change in accordance with the voltage applied to the inter-electrode gap (between the electrode and the workpiece), there is no need for the compensation unit 42 to change the coefficient "α2" of Equation (2) in accordance with the voltage applied to the inter-electrode gap, and the processing load in the compensation unit 42 can be reduced.

In the wire electrical discharge machine 10 according to the present embodiment, the motor control unit 44, in accordance with the reciprocal of the compensated number of discharge pulses, sets at least one of the proportional gain of the proportional control, the integration time of the integral control, the derivative time of the derivative control, or the target machining speed. In accordance with this feature, the wire electrical discharge machine 10 is capable of improving the machining accuracy of the workpiece 14.

[Third Embodiment]

In the first embodiment, the electric discharge gap is estimated based on the average inter-electrode voltage. In contrast to this feature, according to the present embodiment, the electric discharge gap is estimated on the basis of a discharge delay time period. As shown in FIG. 3A and FIG. 3B, the discharge delay time period is a time period from application of the voltage to the inter-electrode gap until discharging takes place in the inter-electrode gap.

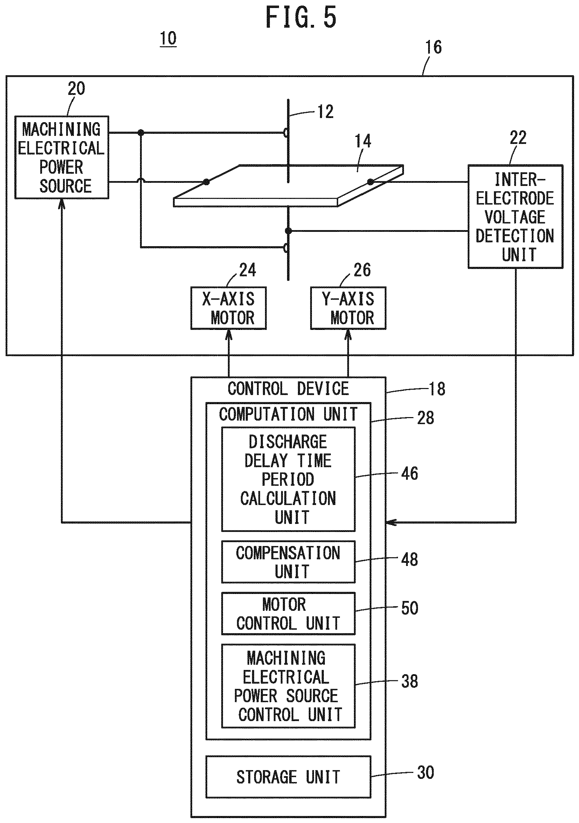

FIG. 5 is a schematic diagram showing a wire electrical discharge machine 10. The structure of the machine main body 16 is the same as the structure of the machine main body 16 according to the first embodiment. The computation unit 28 of the control device 18 includes a discharge delay time period calculation unit 46, a compensation unit 48, a motor control unit 50, and a machining electrical power source control unit 38. The machining electrical power source control unit 38 is the same as the machining electrical power source control unit 38 according to the first embodiment.

The discharge delay time period calculation unit 46 calculates the discharge delay time period based on the inter-electrode voltage detected by the inter-electrode voltage detection unit 22. When discharging takes place after the voltage is applied to the inter-electrode gap, the inter-electrode voltage decreases. The discharge delay time period calculation unit 46 calculates the discharge delay time period based on the time period from when the voltage is applied to the inter-electrode gap until the inter-electrode voltage becomes less than or equal to a predetermined voltage. The discharge delay time period calculation unit 46 corresponds to the discharge state value acquisition unit of the present invention. The compensation unit 48 compensates the discharge delay time period in accordance with the machining speed. A description will be given later concerning the compensation of the discharge delay time period performed in the compensation unit 48. The compensation unit 48 corresponds to the discharge state value compensation unit of the present invention. The motor control unit 50 controls the X-axis motor 24 and the Y-axis motor 26, and thereby sets the machining speed to a target machining speed. The target machining speed is set based on the discharge delay time period that has been compensated in the compensation unit 48. Hereinafter, the discharge delay time period that has been compensated by the compensation unit 48 may be referred to as a compensated discharge delay time period. The motor control unit 50 corresponds to the control unit of the present invention.

Moreover, it should be noted that the motor control unit 50 may perform a proportional control, an integral control, or a derivative control (PID control) on the X-axis motor 24 and the Y-axis motor 26. The motor control unit 50 may control the X-axis motor 24 and the Y-axis motor 26 based on the target machining speed, which is set based on the discharge delay time period prior to being compensated. In this case, the motor control unit 50 may set at least one of the proportional gain, the integration time, or the derivative time in accordance with the compensated discharge delay time period.

The compensation unit 48 determines the compensated discharge delay time period on the basis of the following Equation (3). "Tc" in the equation indicates the compensated discharge delay time period. "T" in the equation indicates the discharge delay time period. "α3" in the equation indicates a coefficient. "V" in the equation indicates the machining speed.

$$Tc = T/\alpha 3^{(1+V)} \qquad\qquad \dots (3)$$

As shown in FIG. 3A and FIG. 3B, the average inter-electrode voltage changes in accordance with the voltage applied to the inter-electrode gap. Therefore, the compensation unit 34 of the first embodiment changes the coefficient "$\alpha 1$" in Equation (1) in accordance with the voltage applied to the inter-electrode gap. On the other hand, as shown in FIG. 3A and FIG. 3B, the discharge delay time period does not change in accordance with the voltage applied to the inter-electrode gap. Therefore, there is no need for the compensation unit 48 to change the coefficient "$\alpha 3$" of Equation (3) in accordance with the inter-electrode voltage.

[Actions and Advantageous Effects]

In the wire electrical discharge machine 10 according to the present embodiment, the compensation unit 48 determines the compensated discharge delay time period on the basis of an equation in which the discharge delay time period defines a numerator, and a value obtained by exponentiation with the coefficient as the base and the machining speed as the exponent defines a denominator. The motor control unit 50 controls the X-axis motor 24 and the Y-axis motor 26 based on the compensated discharge delay time period, and thereby keeps the size of the electric discharge gap constant during electrical discharge machining of the workpiece 14. In accordance with this feature, the wire electrical discharge machine 10 is capable of improving the machining accuracy of the workpiece 14.

In the wire electrical discharge machine 10 according to the present embodiment, the compensation unit 48 determines the compensated discharge delay time period on the basis of the above-described Equation (3). In accordance with this feature, regardless of the machining speed, the wire electrical discharge machine 10 is capable of keeping the size of the electric discharge gap constant during machining.

In the wire electrical discharge machine 10 according to the present embodiment, the discharge delay time period calculation unit 46 calculates the discharge delay time period based on the inter-electrode voltage detected by the inter-electrode voltage detection unit 22. The compensation unit 48 determines the compensated discharge delay time period on the basis of the above-described Equation (3). Since the discharge delay time period does not change in accordance with the voltage applied to the inter-electrode gap, there is no need for the compensation unit 48 to change the coefficient "$\alpha 3$" of Equation (3) in accordance with the voltage applied to the inter-electrode gap, and the processing load in the compensation unit 48 can be reduced.

In the wire electrical discharge machine 10 according to the present invention, the motor control unit 50, in accordance with the compensated discharge delay time period, sets at least one of the proportional gain of the proportional control, the integration time of the integral control, the derivative time of the derivative control, or the target machining speed. In accordance with this feature, the wire electrical discharge machine 10 is capable of improving the machining accuracy of the workpiece 14.

It should be noted that the present invention is not limited to the above-described embodiments, and various configurations can be adopted therein without departing from the essence and gist of the present invention.

(Technical Concepts that can be Obtained from the Embodiments)

Technical concepts that are capable of being grasped from the above-described embodiments will be described below.

In the wire electrical discharge machine (10) that carries out machining of the workpiece (14) by generating an electric discharge in the inter-electrode gap between the wire electrode (12) and the workpiece, the wire electrical discharge machine includes the discharge state value acquisition unit (32) that acquires as the discharge state value any one of the average inter-electrode voltage, which is a time average of the voltage applied to the inter-electrode gap, the reciprocal of the number of discharge pulses in the inter-electrode gap per unit time, or the discharge delay time period, which is the time period from when the voltage is applied to the inter-electrode gap until when electric discharging takes place in the inter-electrode gap, the discharge state value compensation unit (34) that compensates the discharge state value to obtain the compensated value in accordance with the machining speed, which is the relative speed of the wire electrode with respect to the workpiece, the driving unit (24, 26) that causes the wire electrode to move relatively with respect to the workpiece, and the control unit (36) that controls the driving unit based on the compensated value, and thereby keeps the size of the inter-electrode gap constant during machining, wherein the discharge state value compensation unit determines the compensated value based on an equation in which the discharge state value defines a numerator, and the value obtained by exponentiation with the coefficient as the base and the machining speed as the exponent defines a denominator. In accordance with these features, the wire electrical discharge machine is capable of improving the machining accuracy of the workpiece.

In the above-described wire electrical discharge machine, the discharge state value compensation unit may determine the compensated value based on the equation $Sc = S/\alpha^{(1+V)}$ where the compensated value is Sc, the discharge state value is S, the coefficient is $\alpha$, and the machining speed is V. In accordance with this feature, regardless of the machining speed, the wire electrical discharge machine is capable of keeping the size of the electric discharge gap constant during machining.

In the above-described wire electrical discharge machine, the discharge state value acquisition unit may acquire, as the discharge state value, the reciprocal of the number of discharge pulses per unit time, or the discharge delay time period. In accordance with this feature, the discharge state value compensation unit does not have to change the coefficient $\alpha$ in accordance with the voltage applied to the inter-electrode gap, and the processing load in the discharge state value compensation unit can be reduced.

In the above-described wire electrical discharge machine, the control unit may subject the driving unit to a proportional control, an integral control, and a derivative control, and may thereby set the machining speed to a target machining speed, and may set, in accordance with the compensated value, at least one of a proportional gain of the proportional control, an integration time of the integral control, a derivative time of the derivative control, or the target machining speed. In accordance with these features, the wire electrical discharge machine is capable of improving the machining accuracy of the workpiece.

In the method of controlling the wire electrical discharge machine (10) configured to machine the workpiece (14) by generating the electric discharge in an inter-electrode gap between the wire electrode (12) and the workpiece, the method of controlling the wire electrical discharge machine includes the discharge state value acquisition step of acquiring, as the discharge state value, any one of the average inter-electrode voltage, which is a time average of the voltage applied to the inter-electrode gap, the reciprocal of the number of discharge pulses in the inter-electrode gap per unit time, or the discharge delay time period, which is a time period from when the voltage is applied to the inter-electrode gap until when electric discharging takes place in the inter-electrode gap, the discharge state value compensation step of compensating the discharge state value to obtain the compensated value in accordance with the machining speed, which is the relative speed of the wire electrode with respect to the workpiece, the driving step of causing the wire electrode to move relatively with respect to the workpiece by the driving unit, and the control step of controlling the driving unit (24, 26) based on the compensated value, and thereby keeping the size of the inter-electrode gap constant during machining, wherein, in the discharge state value compensation step, the compensated value is determined based on an equation in which the discharge state value defines a numerator, and the value obtained by exponentiation with the coefficient as the base and the machining speed as the exponent defines a denominator. In accordance with these features, the wire electrical discharge machine is capable of improving the machining accuracy of the workpiece.

In the above-described method of controlling the wire electrical discharge machine, in the discharge state value compensation step, the compensated value may be determined based on the equation $Sc = S/\alpha^{(1+V)}$ where the compensated value is Sc, the discharge state value is S, the coefficient is $\alpha$, and the machining speed is V. In accordance with this feature, regardless of the machining speed, the wire electrical discharge machine is capable of keeping the size of the electric discharge gap constant during machining.

In the above-described method of controlling the wire electrical discharge machine, in the discharge state value acquisition step, the reciprocal of the number of discharge pulses per unit time, or the discharge delay time period may be acquired as the discharge state value. In accordance with this feature, in the discharge state value compensation step, there is no need to change the coefficient $\alpha$ in accordance with the voltage applied between the electrode and the workpiece, and the processing load in the discharge state value compensation step can be reduced.

In the above-described method of controlling the wire electrical discharge machine, in the control step, the driving unit may be subjected to a proportional control, an integral control, and a derivative control, to thereby set the machining speed to the target machining speed, and in accordance with the compensated value, at least one of a proportional gain of the proportional control, an integration time of the integral control, a derivative time of the derivative control, or the target machining speed is set. In accordance with these features, the wire electrical discharge machine is capable of improving the machining accuracy of the workpiece.

Reference Signs List

10: wire electrical discharge machine
12: wire electrode
14: workpiece
24: X-axis motor (driving unit)
26: Y-axis motor (driving unit)
32: average inter-electrode voltage calculation unit (discharge state value acquisition unit)
34: compensation unit (discharge state value compensation unit)

36: motor control unit (control unit)

**Claims**

1. A wire electrical discharge machine (10) configured to carry out machining of a workpiece (14) by generating an electric discharge in an inter-electrode gap between a wire electrode (12) and the workpiece, the wire electrical discharge machine comprising:

   a discharge state value acquisition unit (32) configured to acquire, as a discharge state value, any one of an average inter-electrode voltage, which is a time average of a voltage applied to the inter-electrode gap, a reciprocal of a number of discharge pulses in the inter-electrode gap per unit time, or a discharge delay time period, which is a time period from when the voltage is applied to the inter-electrode gap until when the electric discharge is generated in the inter-electrode gap;
   a discharge state value compensation unit (34) configured to compensate the discharge state value to obtain a compensated value in accordance with a machining speed, which is a relative speed of the wire electrode with respect to the workpiece;
   a driving unit (24, 26) configured to cause the wire electrode to move relatively with respect to the workpiece; and
   a control unit (36) configured to control the driving unit based on the compensated value, and thereby keep a size of the inter-electrode gap constant during machining;
   wherein the discharge state value compensation unit determines the compensated value based on an equation in which the discharge state value defines a numerator, and a value obtained by exponentiation with a coefficient as a base and the machining speed as an exponent defines a denominator.

2. The wire electrical discharge machine according to claim 1, wherein
   the discharge state value compensation unit determines the compensated value based on the equation $Sc = S/\alpha^{(1+V)}$ where the compensated value is Sc, the discharge state value is S, the coefficient is $\alpha$, and the machining speed is V.

3. The wire electrical discharge machine according to claim 2, wherein
   the discharge state value acquisition unit acquires, as the discharge state value, the reciprocal of the number of discharge pulses per unit time, or the discharge delay time period.

4. The wire electrical discharge machine according to any one of claims 1 to 3, wherein the control unit:

   subjects the driving unit to a proportional control, an integral control, and a derivative control, and thereby sets the machining speed to a target machining speed; and
   sets, in accordance with the compensated value, at least one of a proportional gain of the proportional control, an integration time of the integral control, a derivative time of the derivative control, or the target machining speed.

5. A method of controlling a wire electrical discharge machine (10) configured to carry out machining of a workpiece (14) by generating an electric discharge in an inter-electrode gap between a wire electrode (12) and the workpiece, the method of controlling the wire electrical discharge machine comprising:

   a discharge state value acquisition step of acquiring, as a discharge state value, any one of an average inter-electrode voltage, which is a time average of a voltage applied to the inter-electrode gap, a reciprocal of a number of discharge pulses in the inter-electrode gap per unit time, or a discharge delay time period, which is a time period from when the voltage is applied to the inter-electrode gap until when the electric discharge is generated in the inter-electrode gap;
   a discharge state value compensation step of compensating the discharge state value to obtain a compensated value in accordance with a machining speed, which is a relative speed of the wire electrode with respect to the workpiece;
   a driving step of causing the wire electrode to move relatively with respect to the workpiece by a driving unit (24, 26); and
   a control step of controlling the driving unit based on the compensated value, and thereby keeping a size of the inter-electrode gap constant during machining;
   wherein, in the discharge state value compensation step, the compensated value is determined based on an equation in which the discharge state value defines a numerator, and a value obtained by exponentiation with a coefficient as a base and the machining speed as an exponent defines a denominator.

6. The method of controlling the wire electrical discharge machine according to claim 5, wherein
in the discharge state value compensation step, the compensated value is determined based on the equation $Sc = S/\alpha^{(1+V)}$ where the compensated value is Sc, the discharge state value is S, the coefficient is $\alpha$, and the machining speed is V.

7. The method of controlling the wire electrical discharge machine according to claim 6, wherein
in the discharge state value acquisition step, the reciprocal of the number of discharge pulses per unit time, or the discharge delay time period is acquired as the discharge state value.

8. The method of controlling the wire electrical discharge machine according to any one of claims 5 to 7, wherein, in the control step:

the driving unit is subjected to a proportional control, an integral control, and a derivative control, to thereby set the machining speed to a target machining speed; and
in accordance with the compensated value, at least one of a proportional gain of the proportional control, an integration time of the integral control, a derivative time of the derivative control, or the target machining speed is set.

# FIG. 1

FIG. 2

DIRECTION
OF MOVEMENT

12

14

ELECTRIC
DISCHARGE GAP

# FIG. 3A

VOLTAGE

UNIT TIME

DISCHARGE DELAY TIME PERIOD | DISCHARGE DELAY TIME PERIOD | DISCHARGE DELAY TIME PERIOD | DISCHARGE DELAY TIME PERIOD

AVERAGE INTER-ELECTRODE VOLTAGE

→ TIME

DISCHARGE DISCHARGE DISCHARGE DISCHARGE

NUMBER OF DISCHARGE PULSES: 4

# FIG. 3B

VOLTAGE

UNIT TIME

DISCHARGE DELAY TIME PERIOD | DISCHARGE DELAY TIME PERIOD | DISCHARGE DELAY TIME PERIOD | DISCHARGE DELAY TIME PERIOD

AVERAGE INTER-ELECTRODE VOLTAGE

→ TIME

DISCHARGE DISCHARGE DISCHARGE DISCHARGE

NUMBER OF DISCHARGE PULSES: 4

# FIG. 4

# FIG. 5

10

16

20

MACHINING
ELECTRICAL
POWER
SOURCE

12

14

22

INTER-
ELECTRODE
VOLTAGE
DETECTION
UNIT

24

X-AXIS
MOTOR

26

Y-AXIS
MOTOR

CONTROL DEVICE — 18

COMPUTATION UNIT — 28

DISCHARGE
DELAY TIME
PERIOD
CALCULATION
UNIT — 46

COMPENSATION
UNIT — 48

MOTOR
CONTROL UNIT — 50

MACHINING
ELECTRICAL
POWER SOURCE
CONTROL UNIT — 38

STORAGE UNIT — 30

## INTERNATIONAL SEARCH REPORT

| International application No. |
| --- |
| PCT/JP2021/023907 |

### A. CLASSIFICATION OF SUBJECT MATTER
B23H 1/02(2006.01)i
FI: B23H1/02 A

According to International Patent Classification (IPC) or to both national classification and IPC

### B. FIELDS SEARCHED

Minimum documentation searched (classification system followed by classification symbols)
B23H1/02

| Documentation searched other than minimum documentation to the extent that such documents are included in the fields searched | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 5794401 B1 (MITSUBISHI ELECTRIC CORP) 14 October 2015 (2015-10-14) paragraphs [0014]-[0026], fig. 1-8 | 1-8 |
| A | JP 2017-042858 A (FANUC LTD) 02 March 2017 (2017-03-02) paragraphs [0018]-[0036], fig. 1-9 | 1-8 |
| A | JP 04-063630 A (MAKINO MILLING MACH CO LTD) 28 February 1992 (1992-02-28) page 4, upper right column, line 9 to page 6, upper right column, line 3, fig. 1-2 | 1-8 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11 August 2021 (11.08.2021) | 24 August 2021 (24.08.2021) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

INTERNATIONAL SEARCH REPORT

Information on patent family members

International application No.

PCT/JP2021/023907

| Patent Documents referred in the Report | Publication Date | Patent Family | Publication Date |
|---|---|---|---|
| JP 5794401 B1 | 14 Oct. 2015 | US 2017/0014926 A1 paragraphs [0031]-[0056], fig. 1-8 CN 106132611 A | |
| JP 2017-042858 A | 02 Mar. 2017 | US 2017/0056992 A1 paragraphs [0031]-[0052], fig. 1-9 EP 3135416 A1 CN 106475646 A KR 10-2017-0024553 A | |
| JP 04-063630 A | 28 Feb. 1992 | (Family: none) | |

Form PCT/ISA/210 (patent family annex) (January 2015)

**EP 4 338 878 A1**

## REFERENCES CITED IN THE DESCRIPTION

**Patent documents cited in the description**

- WO 2015145484 A1